Europäisches Patentamt

European Patent Office

Office européen des brevets

(11) Veröffentlichungsnummer: **0 074 597**
**B1**

(12) **EUROPÄISCHE PATENTSCHRIFT**

(45) Veröffentlichungstag der Patentschrift:
20.04.88

(21) Anmeldenummer: **82108201.3**

(22) Anmeldetag: **06.09.82**

(51) Int. Cl.⁴: **H 04 N 9/465**

(54) Verfahren und Anordnung zur digitalen Regelung der Phase des Systemtaktes eines digitalen Signalverarbeitungssystems.

(30) Priorität: **15.09.81 DE 3136522**

(43) Veröffentlichungstag der Anmeldung:
**23.03.83 Patentblatt 83/12**

(45) Bekanntmachung des Hinweises auf die Patenterteilung:
**20.04.88 Patentblatt 88/16**

(84) Benannte Vertragsstaaten:
**AT DE FR GB IT**

(56) Entgegenhaltungen:
**US - A - 4 291 332**

**ELECTRONICS, Band 54, Nr. 16, August 11, 1981, NEW YORK (US). Seiten 97-103 T. FISCHER: "Digital VLSI breeds next-generation TV receivers".**

(73) Patentinhaber: **Siemens Aktiengesellschaft Berlin und München, Wittelsbacherplatz 2, D-8000 München 2 (DE)**

(72) Erfinder: **Haussmann, Wolfgang, Dipl.-Ing., Untersbergstrasse 90, D-8000 München 90 (DE)**
Erfinder: **Lüder, Rainer, Kohlstattstrasse 10, D-8024 Oberhaching (DE)**

**Beschreibung**

Die Erfindung betrifft ein Verfahren und eine Anordnung zur digitalen Regelung der Phase des Systemtaktes eines digitalen Signalverarbeitungssystems, das ein analoges, ein Bezugssignal beinhaltendes Signal verarbeitet, bei dem zwischen dem digitalisierten Bezugssignal und dem Systemtakt eine feste Phasenbeziehung besteht.

Entsprechende Verfahren werden z.B. für Taktsysteme zur digitalen Farbdecodierung, beispielsweise nach dem PAL- oder NTSC-Prinzip, benötigt. Hierbei muss der Systemtakt in Phase und Frequenz auf ein Vielfaches der Farbträgerfrequenz synchronisiert werden, da mit dem Systemtakt die Abtastung des analogen FBAS (Farbbildaustastsynchron)-Signals und die weitere Verarbeitung der digitalisierten Abtastwerte erfolgt. Für die weitere Verarbeitung der digitalisierten Abtastwerte in einem solchen digitalen Signalverarbeitungssystem sollen aus dem Systemtakt weitere Taktsignale mit der Farbträgerfrequenz abgeleitet werden, die eine exakte Phasenlage zum Referenzträger, dem im analogen FBAS-Signal enthaltenden Bezugssignal, besitzen.

Zu diesem Zwecke ist es aus der DE-A1-2 854 236 bekannt, dass das auf übliche Weise gewonnene FBAS-Signal wie bei bekannten Farbfernsehempfängern den Farbhilfsträger-Quarzoszillator steuert, der als Rechtecksignal-Taktgenerator ausgebildet ist. Der Taktgenerator wird durch das im FBAS-Signal enthaltene Farbsynchronisiersignal (sogenannter Burst) auf ein Vielfaches der Farbhilfsträgerfrequenz synchronisiert. Bei dieser Lösung wird also das analoge FBAS-Signal einerseits einem Analog/Digital (A/D)-Wandler mit Abtasteinrichtung und andererseits parallel dazu einer analogen Phasenregelschleife, die das im FBAS-Signal enthaltene Burst-Signal zur Synchronisierung verwendet, zugeführt.

Entsprechende Lösungen haben in digitalen Signalverarbeitungssystemen den Nachteil, dass sie nicht die gewünschte Phasenlage gewährleisten, da im A/D-Wandler zwischen Eingang und Abtasteinrichtung sowie im Taktgenerator nicht vernachlässigbare Laufzeiten auftreten, die den Abtastzeitpunkt verschieben. Ein Abgleich über ein variables Laufzeitelement ist aufwendig und langzeitlich nicht stabil. Ein weiterer Nachteil ist, dass ein solcher analoger Phasenregelkreis zusammen mit digitalen Schaltungen auf einem Chip in einer Technologie integriert werden muss, die für digitale Schaltungen optimiert ist.

Weiter ist aus «Electronics», Band 54, Nr. 16, 11.08.1981, S. 97 bis 103 ein Verfahren der eingangs genannten Art bekannt, bei dem ein Video-Signal in einem A/D-Wandler digitalisiert und anschliessend in einem Video-Prozessor weiterverarbeitet wird, der eine Phasenregelung enthält, die aus abgeleiteten modulierten Signalen ein Differenzsignal bildet, das ein direktes Mass der relativen Phasendifferenz zwischen dem Bezugssignal und dem Systemtakt darstellt und das einen spannungsgesteuerten Oszillator nachzieht. Dieses Verfahren weist eine vergleichsweise hohe Abtastfehlerrate auf.

Aufgabe der Erfindung ist es, eine digitale Phasenregelung eines Systemtaktes für ein analoge Signale verarbeitendes digitales Signalverarbeitungssystem zu finden, bei dem eine feste Phasenbeziehung zwischen dem Systemtakt und den Abtastwerten eines im Analogsignal enthaltenen Bezugsignals besteht.

Diese Aufgabe wird bei einem Verfahren der eingangs genannten Art erfindungsgemäss dadurch gelöst, dass das Bezugssignal durch Abtasten des analogen Bezugssignals digitalisiert wird, dass die Abtastwerte des digitalisierten Bezugssignals zur Gewinnung einer digitalen Phasenvergleichsgrösse gewichtet werden und dass die Phasenvergleichsgrösse über ein digitales PLL-Filter einem digital steuerbaren Oszillator zugeführt wird, aus dessen Ausgangssignal der Systemtakt abgeleitet wird.

Aus dem digitalen Bezugssignal kann mit geringem technischen Aufwand eine phasensensitive Grösse gewonnen werden, mit deren Hilfe der Systemtakt bezüglich des Bezugssignals phasensynchronisierbar ist.

Eine Anordnung zur Durchführung des erfindungsgemässen Verfahrens wird vorteilhafterweise so ausgeführt, dass ein A/D-Wandler vorgesehen ist, der das analoge, ein Bezugssignal beinhaltende Signal durch Abtastung mit einem aus dem Systemtakt abgeleiteten Takt digitalisiert, dass eine Phasenvergleichsschaltung vorgesehen ist, der über einen vom Ausgang des A/D-Wandlers beaufschlagten Abtasters während der aktiven Zeit des Bezugssignals jeder n-te Abtastwert des Bezugssignals zugeführt wird und die durch Gewichtung die Phasenabweichung zwischen digitalisiertem Bezugssignal und Systemtakt ermittelt, dass ein PLL-Filter vorgesehen ist, dem die Phasenabweichung zuführbar ist, und dass ein von den digitalen Ausgangssignalen des PLL-Filters steuerbarer Oszillator vorgesehen ist, aus dessen Ausgangssignal der Systemtakt ableitbar ist.

Es liegt im Rahmen der Erfindung, eine Anordnung zur Synchronisierung des Systemtaktes eines digitalen Farbdecoders zum im FBAS-Signal eines Farbfernsehempfängers enthaltenen Burst-Signal so auszuführen, dass ein A/D-Wandler vorgesehen ist, der das FBAS-Signal durch Abtastung mit der n-fachen, insbesondere 4-fachen, Farbträgerfrequenz (Systemtakt) digitalisiert, dass eine Phasenvergleichsschaltung vorgesehen ist, der über einen vom Ausgang des A/D-Wandlers beaufschlagten Abtaster während der Burstzeit jeder n-te Abtastwert des Burstsignals zugeführt wird und die durch die Gewichtung die Phasenabweichung zwischen dem digitalisierten Burstsignal und dem Systemtakt ermittelt, dass ein PLL-Filter vorgesehen ist, dem die Phasenabweichung zuführbar ist und dass ein von den digitalen Ausgangssignalen des PLL-Filters steuerbarer Oszillator vorgesehen ist, aus dessen Ausgangssignal der Systemtakt ableitbar ist.

Weiterhin kann eine Anordnung angegeben werden zur phasenstarren Synchronisierung des Systemtaktes einer Anordnung, die zur digitalen Verarbeitung eines einen Pilotton enthaltenden Stereosignales dient, auf ein Vielfaches des Pilottones, die vorteilhafterweise durch einen A/D-Wandler, der das Stereosignal durch Abtastung mit der n-fachen, insbesondere 8-fachen, Frequenz des Pilottons digitalisiert, eine Phasenvergleichsschaltung, der über einen vom Ausgang des A/D-Wandlers über ein digitales, für die Frequenz des Pilottons als Bandpass wirkendes Filter beaufschlagten Abtaster jeder m-te Abtastwert des Pilottons zugeführt wird und die durch Gewichtung die Phasenabweichung zwischen dem digitalisierten Pilotton und dem Systemtakt ermittelt, ein PLL-Filter, dem die Phasenabweichung zuführbar ist und ein von den digitalen Signalen des PLL-Filters steuerbaren Oszillator, aus dessen Ausgangssignal der Systemtakt ableitbar ist, gekennzeichnet ist.

Ausgestaltungen der erfindungsgemässen Anordnung sind in Unteransprüchen gekennzeichnet.

Die Erfindung wird im folgenden anhand der Figuren näher erläutert. Es zeigen:

Die Figur 1 das Block-Schaltbild einer, eine analoge Phasenregelschleife aufweisenden Anordnung, wie sie nach DE-OS 2 854 236 zur Synchronisierung des Systemtaktgenerators eines digitalen Farbfernsehempfängers durch das Burst-Signal verwendet werden kann,

die Figur 2 das Block-Schaltbild eines allgemeinen Ausführungsbeispieles einer Anordnung zur Durchführung des erfindungsgemässen Verfahrens,

die Figur 3 das Blockschaltbild eines speziellen erfindungsgemässen Ausführungsbeispieles einer Anordnung zur Synchronisierung des Systemtaktes zum im FBAS-Signal enthaltenen Burst-Signal,

die Figur 4 ein Diagramm der sich zwischen dem Burst-Signal und dem Systemtakt beim Ausführungsbeispiel nach Figur 3 einstellenden Phasenlage,

die Figur 5 ein weiteres Ausführungsbeispiel für eine erfindungsgemässe Anordnung zur Synchronisierung des Systemtaktes zum FBAS-Signal enthaltenen Burst-Signals,

die Figur 6 in einem Zeitdiagramm die Sollabtastzeitpunkte für das Burst-Signal sowie für die Farbsignalkomponenten beim Ausführungsbeispiel nach Figur 5,

die Figur 7 das Blockschaltbild eines Ausführungsbeispiels zur Synchronisierung des Systemtaktes zum Burst-Signal, das auf die Verwendung von nach der NTSC-Norm genormten FBAS-Signalen hin erweitert ist,

die Figur 8 ein Zeitdiagramm für die Verschiebung der Abtastzeitpunkte beim Ausführungsbeispiel nach Fig. 7 in Abhängigkeit des NTSC-Farbkorrekturwertes,

die Figur 9 das Frequenzband eines Stereosignals mit Pilotton und

die Figur 10 ein Blockschaltbild eines Ausführungsbeispiels einer erfindungsgemässen Anordnung zur Synchronisierung des Systemtaktes einer Anordnung zur digitalen Verarbeitung des Stereosignals nach Figur 9.

In den Figuren sind gleiche Elemente mit gleichen Bezugszeichen bezeichnet.

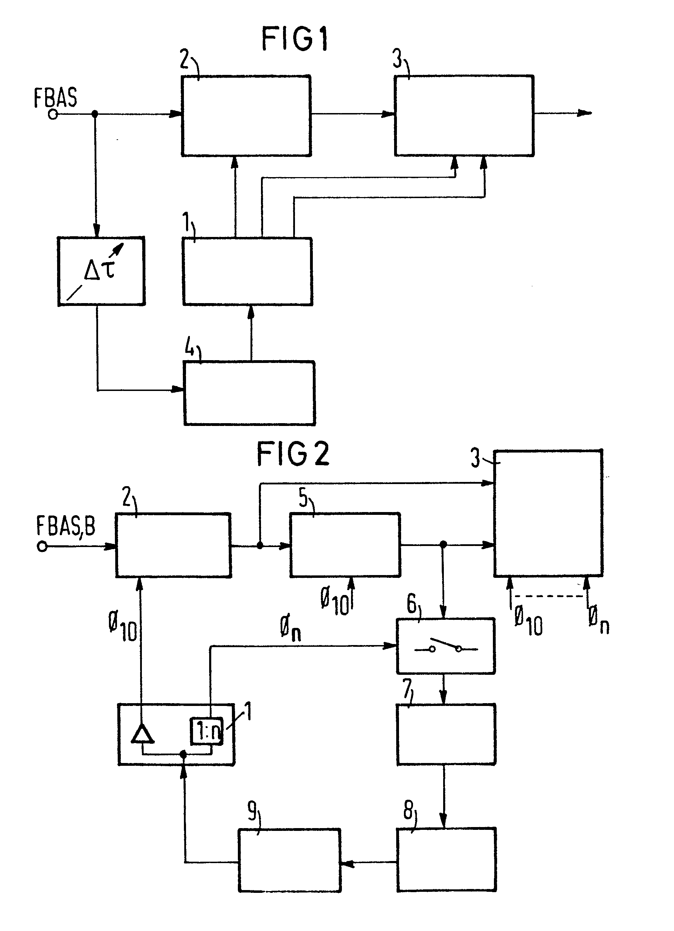

Die Figur 1 zeigt im Blockschaltbild eine Anordnung zum Synchronisieren eines Taktgenerators 1 auf die gesendete Farbhilfsträgerfrequenz eines Farbfernsehsignales durch das im FBAS-Signal FBAS enthaltene sogenannte Burst-Signal, wie es z.B. bei einem beispielsweise aus der DE-OS 2 854 236 bekannten digitalen Farbfernsehempfänger verwendet werden kann. Das analoge FBAS-Signal FBAS wird einem A/D-Wandler 2 mit Abtasteinrichtung und anschliessend der eigentlichen digitalen Signalverarbeitungsanordnung 3 zugeführt. Das Signal FBAS wird ferner einer analogen Phasenregelschleife (PLL) 4 zugeführt, die das im Signal FBAS enthaltene Burst-Signal zur Synchronisierung verwendet. Das Ausgangssignal der analogen Phasenregelschleife 4 wird dem Taktgenerator 1 zugeführt, der den Abtasttakt für den A/D-Wandler 2 und die notwendigen Takte für die digitale Signalverarbeitungsanordnung 3 generiert.

Diese Lösung hat in einem digitalen System den Nachteil, dass sie nicht die gewünschte Phasenlage gewährleistet, da im A/D-Wandler 2 zwischen Eingang und Abtasteinrichtung sowie im Taktgenerator 1 nicht vernachlässigbare Laufzeiten auftreten, die den Abtastzeitpunkt verschieben. Ein Abgleich über ein zwischen Eingang und analogen Phasenregelschleife 4 geschaltetes Laufzeitelement $\Delta \tau$ ist aufwendig und langzeitlich nicht stabil. Ein weiterer Nachteil ist, dass ein solcher analoger Phasenregelkreis zusammen mit digitalen Schaltungen auf einem Chip in einer Technologie integriert werden muss, die für digitale Schaltungen optimiert ist. Die nicht exakt bekannten Laufzeiten sind insbesondere auch daher von Nachteil, da für die weitere Verarbeitung der Farbfernsehsignale in der digitalen Signalverarbeitungsanordnung 3 eine Abtastung des Signals FBAS im A/D-Wandler 2 mit einer vorgegebenen Phasenbeziehung zum Farbhilfsträger (z.B. Phase 0 Grad) gefordert wird.

Diese, allgemein bei der digitalen Verarbeitung eines, ein Bezugssignal beinhaltenden analogen Signals, das phasensynchron zum Bezugssignal verarbeitet werden soll, so dass zwischen Bezugssignal und digitalisiertem Signal eine feste Phasenbeziehung besteht, auftretende Nachteile werden erfindungsgemäss dadurch verhindert, dass man das analoge Bezugssignal digitalisiert, seine Abtastwerte gewichtet und aus den gewichteten Abtastwerten eine digitale Phasenvergleichsgrösse gewinnt, die eine an sich bekannte Phasenregelschleife mit einem digitalen PLL-Filter steuert.

Ein Ausführungsbeispiel, bei dem die digitalisierten Abtastwerte des Bezugssignals verwendet werden, um einen voll digital arbeitenden Phasenregelkreis zu synchronisieren, zeigt als Block- schaltbild die Figur 2. Bei den zunächst erörterten Ausführungsbeispielen wird als Signal von einem FBAS-Signal ausgegangen, als im Eingangssignal enthaltenes Bezugssignal dient das Burst-Signal B. Das Eingangssignal FBAS wird durch den Takt $\Phi_{10}$ mit der n-fachen Farbträgerfrequenz, nachfolgend wird insbesondere die 4-fache Farbträgerfrequenz (bei CCIR-Norm 17,73 MHz) angenommen, abgetastet und die digitalen Abtastwerte einem digitalen Filter 5, das ebenfalls von Takt $\Phi_{10}$ gesteuert wird, zugeführt. Das Ausgangssignal des Digitalfilters 5 wird einem Abtaster 6 zugeführt, der während der Burst-Zeit, d.h. während der Zeit, während der das Burst-Signal auftritt (Burst Gate Impuls BG), jeden m-ten Abtastwert des Burst-Signals einem digitalen Phasendetektor 7 und einem PLL-Filter 8 zuführt, wobei m = 2, 4, 8 ... Die Phasenvergleichsschaltung 7 ermittelt aus den Abtastwerten des Burst-Signales seine Phasenlage. Vorteilhafterweise ermittelt die Phasenvergleichsschaltung 7 aus Amplitude und Vorzeichen jedes vierten Abtastwertes des Burst-Signals die Phasenabweichung, die über das PLL-Filter 8 zu digitalen Steuergrösse eines digital steuerbaren Oszillators 9 wird. Das Ausgangssignal des den Systemtakt $\Phi_{10}$ bestimmenden Oszillators 9 wird einem Taktgenerator 1 zugeführt, der den Systemtakt $\Phi_{10}$ und weitere, durch Teilung des Systemtaktes $\Phi_{10}$ durch den Faktor n gewonnene Taktsignale $\Phi_n$ an das digitale Signalverarbeitungssystem 3 abgibt.

Das Digitalfilter 5 sowie die Phasenvergleichsschaltung 7 können in mehreren Ausführungsformen realisiert werden. Dadurch kann der Phasenregelkreis der Burst-Signalübertragung von unterschiedlichen Farbfernsehnormen, wie z.B. PAL, NTSC, angepasst werden. Ferner kann die gewünschte Phasenlage (0°, 45°) zwischen Referenzsignal (Burst-Signal) und dem Takt $\Phi_n$ festgelegt werden.

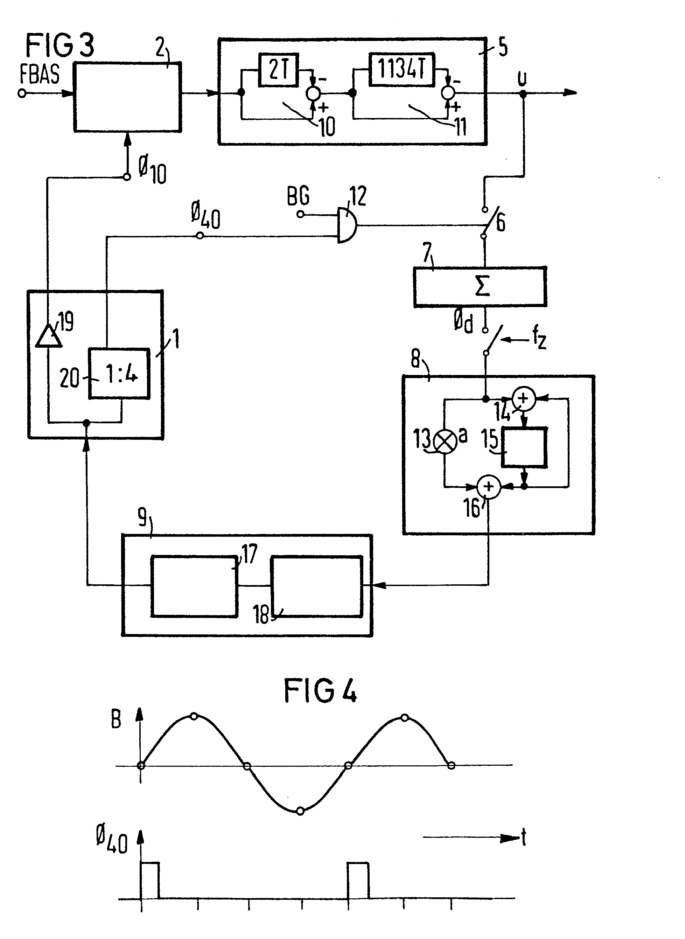

Ein Ausführungsbeispiel zur Durchführung des erfindungsgemässen Verfahrens für PAL-Norm zeigt die Figur 3. Hier besteht das digitale Filter 5 aus einer Reihenschaltung eines Bandpasses 10 und eines PAL-Kammfilters 11. Der Bandpass 10 hat die Übertragungscharakteristik $(1-z^{-2})$ mit $z = e^{j\omega/f}A$, d.h. am Ausgang des Bandpasses 10 wird vom Eingangssignal das um zwei Abtastperioden (Abtastperiode = $1/f_A$) verzögerte Eingangssignal substrahiert. Der Bandpass 10 hat die Funktion eines Bandpassfilters und bewirkt, dass aus dem digitalisierten Signal FBAS das Burst-Signal und das Farbartsignal herausgefiltert werden.

Das PAL-Kammfilter 11 hat die Übertragungsfunktion $(1-z^{-1134})$, mit $z = e^{j\omega/f}A$. Das Kammfilter bildet aus dem – dem PAL-Verfahren eigenen – alterrierenden Burstsignal die mittlere Phasenlage, die dann den Bezugspunkt für die Phasenregelschleife darstellt.

Am Abtaster 6 liegt also die $F_u$ (moduliertes/U-Farbdifferenzsignal)-Komponente des Burst-Signals. Der Abtaster 6, der z.B. jeden 4. Abtastwert des Burst-Signals ($\Phi_{40}$) an die Phasenvergleichsschaltung 7 liefert, kann beispielsweise in der Weise ausgeführt sein, dass er vom Ausgang eines UND-Gatters 12, dessen einer Eingang vom Takt $\Phi_{40}$ und dessen anderer Eingang vom Burst-Gate-Impuls BG beaufschlagt wird, gesteuert wird.

Die Phasenvergleichsschaltung 7 liefert den Mittelwert dieser Abtastwerte $\Phi_d$ des Burst-Signals an das mit der Zeilenfrequenz $f_z$ arbeitende digitale PLL-Filter 8. Der Mittelwert $\Phi_d$ kann z.B. durch Aufsummieren jedes 4. Abtastwertes des Burst-Signals ermittelt werden und nach dem Ende des Burst-Gate-Impulses mit der Zeilenfrequenz $f_z$ in das PLL-Filter 8 übernommen werden. Wird jeder zweite Abtastwert des Burst-Signals der Phasenvergleichsschaltung 7 zugeführt, so wird eine verbesserte Mittelwertbildung erreicht, wenn die (i + 2)ten Abtastwerte mit komplementären Vorzeichen versehen summiert werden.

Das mit der Zeilenfrequenz $f_z$ arbeitende, das Regelverhalten des PLL-Kreises bestimmende digitale PLL-Filter 8 hat die Übertragungsfunktion

$$H(z') = a + \frac{z'^{-1}}{1-z'^{-1}},$$

mit $z' = e^{j\omega/f}z$. Der Faktor a wird so gewählt, dass das gewünschte Einschwingverhalten des PLL-Kreises erhalten wird und dass ein kleiner Teil der am Eingang des Filters 8 liegenden Phasendifferenz $\Phi_d$ zum Ausgang direkt durchgeht, ein grösserer Teil jedoch integriert wird. Der konstante Faktor a kann im Bereich zwischen 10 bis 100, insbesondere 40 bis 80, vorteilhafterweise als Zweierpotenz ($2^n$) gewählt werden.

Das Filter 8 ist z.B. in der Weise ausführbar, dass das Eingangssignal sowohl einen Multiplizierer 13 (Faktor a) als auch einen ersten Addierer 14 beaufschlagt, dass ein Register 15 vorgesehen ist, das zwischen den Ausgang des Addierers 14 und dem zweiten Eingang des Addierers 14 geschaltet ist und dass ein zweiter Addierer 16 vorgesehen ist, dessen einer Eingang vom Ausgang des Multiplizierers 13 und dessen zweiter Eingang vom Ausgang des Registers 15 beaufschlagt wird und an dessen Ausgang die Ausgangssignale des Filters 8 entnehmbar sind. Durch entsprechenden Multiplexbetrieb ist gegebenenfalls nur ein Addierer für das Filter 8 notwendig. Ist der Faktor a eine Zweierpotenz, wird der Multiplizierer 13 durch eine einfache Stellenverschiebung realisiert.

Im eingeschwungenen Zustand sind die jeweils zweiten Abtastwerte des Burst-Signals Null, bei Abweichung von der Sollphasenlage entsteht eine positive oder negative Fehlergrösse $\Phi_d$, die über das PLL-Filter 8 integriert wird und den digital steuerbaren Oszillator 9 beaufschlagt und die Phasenabweichung des an dessen Ausgang liegenden Taktsignals im Vergleich zum Burst-Signal zu Null gehen lässt. Der digital steuerbare Oszillator 9 ist z.B. in der Weise ausführbar, dass ein spannungsgesteuerter Oszillator 17, z.B. ein VCO (Voltage-Controlled-Oszillator) vorgesehen ist, dem die Ausgangssignale des Filters 8 über einen Digital-Analog-Wandler 18 zugeführt werden. Am Ausgang des Oszillators 9 ist der Takt $\Phi_o$

zu entnehmen, der den Taktgenerator 1 beaufschlagt. Aus dem Takt $\Phi_o$ werden im Taktgenerator 1 durch den Takttreiber 19 der Systemtakt $\Phi_{10}$ sowie durch den Teiler 20 der Takt $\Phi_{40}$, der ein Viertel der Frequenz des Systemtaktes $\Phi_{10}$ aufweist, erzeugt.

Die sich einstellende Phasenlage zwischen dem Burst-Signal B beim Punkt U nach dem Kammfilter 11 und dem Systakt $\Phi_{40}$ sowie die Phasenlage der Abtastzeitpunkte (0°, 90°, 180°, 270°) des Burst-Signals B zeigt die Figur 4. Die Abtastzeitpunkte sind als Kreise auf dem Burst-Signal dargestellt.

Wie die Figur 4 zeigt, werden alle oben genannten Anforderungen an die erfindungsgemässe Anordnung erfüllt.

Insbesondere gelingt es, die für die spätere Verarbeitung des FBAS-Signals in der digitalen Signalverarbeitungsstufe 3 wichtige feste Phasenbeziehung zwischen den digitalisierten Abtastwerten einzuhalten und die Abtastung des Farbhilfsträger mit der Phasenlage 0° zu gewährleisten.

Der Figur 4 ist ferner zu entnehmen, dass Abtastwerte, die im Maximum oder Minimum des Burst-Signals gewonnen werden, weniger als phasensensitive Ausgangsgrössen geeignet sind, als Abtastwerte, die beim Nulldurchgang des Burst-Signals gewonnen werden.

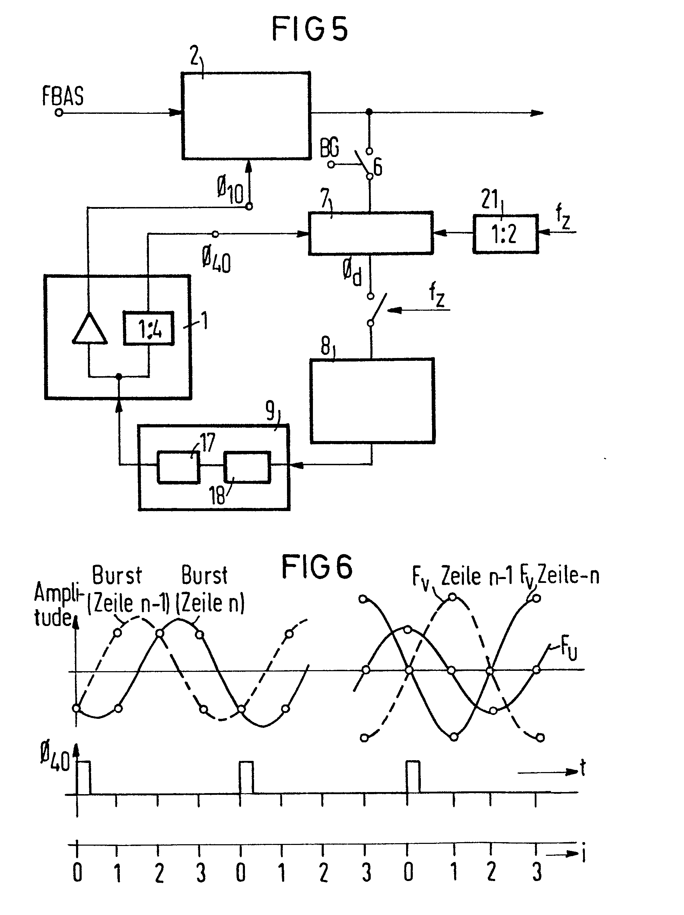

Ein weiteres Ausführungsbeispiel für eine erfindungsgemässe Anordnung zur Synchronisierung des Systemtaktes zum im PAL-FBAS-Signal enthaltenem Burst-Signal zeigt im Blockschaltbild die Figur 5. Bei diesem Ausführungsbeispiel entfällt das Digitalfilter 5. Das Signal FBAS wird im A/D-Wandler 2 digitalisiert und über den Abtaster 6 der Phasenvergleichsschaltung 70 zugeführt. Entsprechend den Ausführungen zum Ausführungsbeispiel nach Figur 3 wird die von der Phasenvergleichsschaltung 70 ermittelte Phasendifferenz $\Phi_d$ mit der Zeilenfrequenz $f_z$ dem z.B. entsprechend dem PLL-Filter nach Figur 3 ausgeführten PLL-Filter 8 zugeführt und steuert sodann einen beispielsweise aus D/A-Wandler 18 und VCO-Oszillator 17 bestehenden digital steuerbaren Oszillator 9, der die Systemtaktfrequenz $\Phi_{10}$ erzeugt und an den Taktgenerator 1 weitergibt. Der Taktgenerator 1 beaufschlagt einerseits den A/D-Wandler 2 mit der Systemtaktfrequenz $\Phi_{10}$ und andererseits die Phasenvergleichsschaltung 70 mit dem Takt $\Phi_{40}$, dessen Frequenz einem Viertel der Systemtaktfrequenz entspricht. Die Phasenvergleichsschaltung 70 wird ferner durch einen 1:2 Teiler 21 für die Zeilenfrequenz $f_z$, der z.B. als Toggle-Flip-Flop ausgeführt sein kann, angesteuert.

Die Sollabtastzeitpunkte für das Burst-Signal B sowie für die modulierten Farbdifferenzkomponenten $F_u$, $F_v$ für die Zeilen (n-1) und n sind durch kleine Kreise im Zeitdiagramm der Figur 6 dargestellt.

Die Phasenvergleichsschaltung 70 addiert bei diesem Ausführungsbeispiel die Abtastwerte nach einem bestimmten Algorithmus. Sie bildet während der Burstzeit (Abtaster 6) einen gewichteten Mittelwert $\Phi_d$ über die Abtastwerte $B_j$, mit j = 0, 1, 2, ...... des Burst-Signals in der Weise, dass (siehe Figur 6)

$$\Phi_d \text{ (Zeile n)} = \sum_j (+B_{0+k} - B_{1+k} - B_{2+k} + B_{3+k})$$

und

$$\Phi_d \text{ (Zeile n-1)} = \sum_j (-B_{0+k} - B_{1+k} + B_{2+k} + B_{3+k}),$$

$$k = 0, 4, 8 \quad j = k+i, \quad i = 0, 1, 2, 3.$$

Wie im Ausführungsbeispiel nach Figur 3 ist bei Sollphasenlage $\Phi_d$ gleich Null. Bei Abweichungen von der Sollphasenlage erhält man eine positive oder negative Fehlergrösse $\Phi_d$, die über das PLL-Filter 8 und den Oszillator 9 die Phasenabweichung reduziert. Die Umschaltung der Phasenvergleichsschaltung 70 von Zeile zu Zeile erfolgt durch den 1:2-Teiler 21 für die Zeilenfrequenz $f_z$. Die zeilenweise Umschaltung und die Gewichtung durch Plus/Minus bewirkt, dass die Phasenregelung in Bezug auf die mittlere Phasenlage (180°) des Burst-Signals erfolgt. Die – entsprechend dem PAL-System – alternierende Farbphasenlage des Burst-Signals hat keinen Einfluss auf die Phasendifferenz $\Phi_d$.

Durch diese Aufhebung der alternierenden Phase des Burst-Signals durch Umschaltung der Gewichtung gelingt es, bei einer von 0° verschiedenen Abtastung des Burstsignals B bei einer Phasenlage von 45°, die den Bildinhalt bestimmenden Farbdifferenzkomponenten $F_u$ und $F_v$ automatisch bei 0° abzutasten, wie es für die weitere Verarbeitung dieser Signale erwünscht ist.

Die erfindungsgemässe Gewichtung des abgetasteten Burst-Signals in der Phasenvergleichsschaltung 70, kann beispielsweise in der Weise erzeugt werden, dass die Abtastwerte des Burst-Signals aufsummiert werden, wobei in der Zeile n das Vorzeichen der Abtastwerte i = 1, 2, in der Zeile n-1 das Vorzeichen der Abtastwerte i = 0, 1 invertiert wird (i = 0, 1, 2, 3). Die Anfangslage des Flip-Flops 21 in Bezug auf die Phasenlage des Bursts ist ebenso wie die Phasenlage des Taktes $\Phi_{40}$ beliebig. Im synchronisierten Zustand liegen die in Figur 6 dargestellten Phasenbeziehungen zwischen Burst, Takt $\Phi_{40}$ und den modulierten Farbartsignalen und deren Abtastzeitpunkte vor.

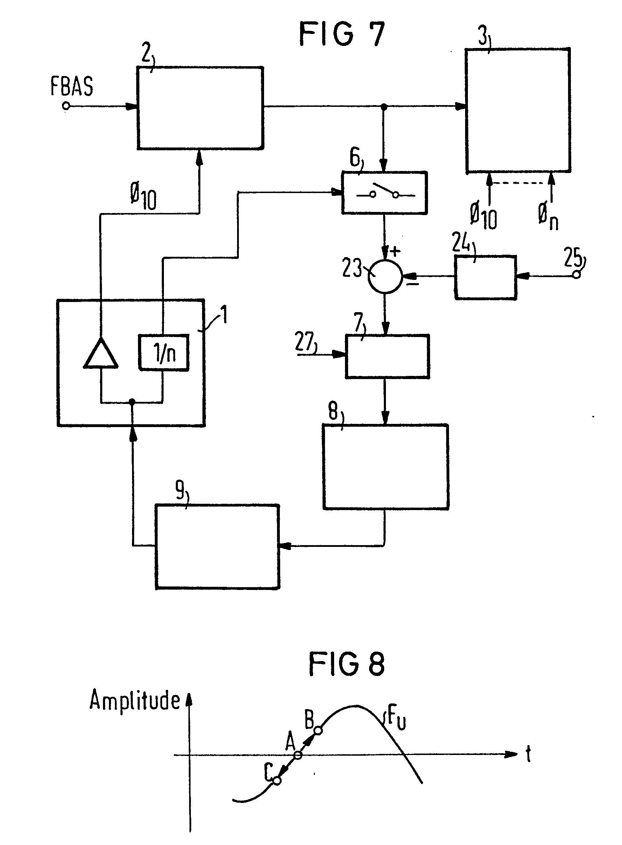

Ein Ausführungsbeispiel für eine Anordnung zur Durchführung des erfindungsgemässen Synchronisationsverfahrens für nach der NTSC-Norm arbeitende Farbfernsehempfänger ist in der Figur 7 im Blockschaltbild gezeigt. Das Ausführungsbeispiel nach Figur 7 ist weitgehend mit den mit Signalen nach PAL-Norm arbeitenden Ausführungsbeispielen der Figuren 3 und 5 identisch. Im Unterschied zu den Ausführungsbeispielen nach den Figuren 3 und 5 wird das durch den A/D-Wandler 2 digitalisierte Signal FBAS über den Abtaster 6 einem Subtrahierer 23 zugeführt, dessen Ausgang die Phasenvergleichsschaltung 7 beaufschlagt. Der bei nach der NTSC-Norm arbeitenden Farbfernsehgeräten vorgesehene NTSC-Farbkorrekturwert 25 wird in einem Register 24 gespeichert und über den Substrahierer 25 von den Werten der Abtastproben des Burst-Signals subtrahiert.

Dadurch kann – wie in der Figur 8 am Beispiel des modulierten Farbartsignals $F_u$ dargestellt – der beispielsweise für den Korrekturwert Null beim Punkt A liegende Abtastzeitpunkt in Richtung B oder C verschoben werden.

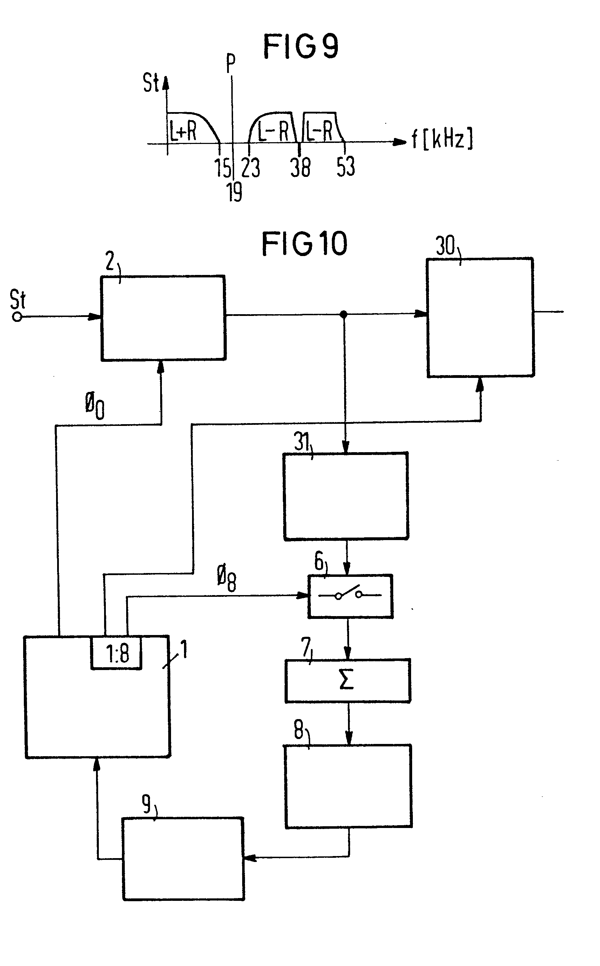

Ein weiteres Ausführungsbeispiel für das erfindungsgemässe Verfahren zur digitalen Phasenregelung eines Systemtaktes eines digitalen Signalverarbeitungssystems mit Hilfe der digitalisierten Abtastwerte eines Bezugssignals ist im Blockschaltbild der Figur 10 dargestellt. Das Ausführungsbeispiel nach Figur 10 betrifft nicht die digitale Verarbeitung eines Farbfernsehsignales, sondern die digitale Verarbeitung eines (Rundfunk)-Stereo-Signals in einer digitalen Stereosignalverarbeitungsanordnung 30. Das Stereosignal kann, wie in der Figur 9 dargestellt, z.B. aus dem Frequenzband für die Informationen (L + R) (linker Kanal und rechter Kanal) von 0 bis 15 kHz, einem Pilotton P von 19 kHz als Bezugssignal, und den Frequenzbändern von 23 kHz bis 38 kHz und von 38 kHz bis 53 kHz für die Informationen (L–R) bestehen. Aufgabe der erfindungsgemässen Anordnung ist es, den ein Vielfaches der Frequenz des Pilottons P, z.B. 8 × 19 kHz = 152 kHz, aufweisenden Systemtakt $\Phi_0$ auf den Pilotton P phasenstarr zu synchronisieren. Zu diesem Zweck wird das Stereo-Signal St durch den A/D-Wandler 2 mit der Frequenz von 152 kHz des Systemtaktes $\Phi_0$ abgetastet und quantisiert. Durch einen digitalen Bandpass 31 für die Frequenz des Pilottons von 19 kHz, dessen Dimensionierung an sich bekannt ist, wird der Pilotton P getrennt. Im Abtaster 6 wird dann z.B. jeder achte Wert des Pilottons P einer Mittelwertbildung in der Phasenvergleichsschaltung 7 zugeführt. Das Ausgangssignal entspricht einer Phasendifferenz, die über das digitale PLL-Filter 8 einen digital steuerbaren Oszillator 9 (z.B. einen VCO) nachzieht.

Der vom Oszillator 9 abgegebene Systemtakt $\Phi_0$ wird vom Taktgenerator an den A/D-Wandler 2 weitergegeben, durch acht geteilt als $\Phi_8$ (19 kHz), an den Abtaster 6 weitergegeben und entsprechend weiteren benötigten Unterteilungen der digitalen Stereosignalverarbeitungsanordnung 30 zugeführt.

In diesem Ausführungsbeispiel steht das Bezugssignal, eine sinusförmige Schwingung, ständig zur Verfügung.

## Patentansprüche

1. Verfahren zur digitalen Regelung der Phase des Systemtaktes ($\Phi_{10}$) eines digitalen Signalverarbeitungssystems, das ein analoges, ein Bezugssignal (13) beinhaltendes Signal (FBAS) verarbeitet, bei dem zwischen dem digitalisierten Bezugssignal und dem Systemtakt ($\Phi_{10}$) eine feste Phasenbeziehung besteht, dadurch gekennzeichnet, dass das Bezugssignal (B) durch Abtasten des analogen Bezugssignals digitalisiert wird, dass die Abtastwerte des digitalisierten Bezugssignals zur Gewinnung einer digitalen Phasenvergleichsgrösse ($\Phi_d$) gewichtet werden und dass die Phasenvergleichsgrösse ($\Phi_d$) über ein digitales PLL-Filter (8) einem digital steuerbaren Oszillator (9) zugeführt wird, aus dessen Ausgangssignal der phasengeregelte Systemtakt ($\Phi_{10}$) abgeleitet wird.

2. Anordnung zur Durchführung des Verfahrens nach Anspruch 1, dadurch gekennzeichnet, dass ein A/D-Wandler (2) vorgesehen ist, der das analoge, ein Bezugssignal beinhaltende Signal (FBAS) durch Abtastung mit einem aus dem Systemtakt ($\Phi_{10}$) abgeleiteten Takt digitalisiert, dass eine Phasenvergleichsschaltung (7) vorgesehen ist, der über einen vom Ausgang des A/D-Wandlers (2) beaufschlagten Abtaster (6) während der aktiven Zeit des Bezugssignals jeder n-te Abtastwert des Bezugssignals zugeführt wird und die durch Gewichtung die Phasenabweichung ($\Phi_d$) zwischen digitalisiertem Bezugssignal und Systemtakt ermittelt, dass ein PLL-Filter (8) vorgesehen ist, dem die Phasenabweichung ($\Phi_d$) zuführbar ist, und dass ein von den digitalen Ausgangssignalen des PLL-Filters (8) steuerbarer Oszillator (9) vorgesehen ist, aus dessen Ausgangssignal der Systemtakt ($\Phi_{10}$) ableitbar ist.

3. Anordnung nach Anspruch 2 zur Synchronisierung des Systemtaktes eines digitalen Farbdecoders zum im FBAS-Signal eines Farbfernsehempfängers enthaltenen Burst-Signals, dadurch gekennzeichnet, dass ein A/D-Wandler (2) vorgesehen ist, der das FBAS-Signal (FBAS) durch Abtastung mit der n-fachen, insbesondere 4-fachen, Farbträgerfrequenz (Systemtakt) digitalisiert, dass eine Phasenvergleichsschaltung (7) vorgesehen ist, der über einen vom Ausgang des A/D-Wandlers (2) beaufschlagten Abtaster (6) während der Burstzeit jeder n-te Abtastwert des Burstsignals (8) zugeführt wird und die durch die Gewichtung die Phasenabweichung ($\Phi_d$) zwischen dem digitalisierten Burstsignal und dem Systemtakt ($\Phi'_{10}$) ermittelt, dass ein PLL-Filter (8) vorgesehen ist, dem die Phasenabweichung ($\Phi_d$) zuführbar ist und dass ein von den digitalen Ausgangssignalen des PLL-Filters (8) steuerbarer Oszillator (9) vorgesehen ist, aus dessen Ausgangssignal der Systemtakt ($\Phi_{10}$) ableitbar ist.

4. Anordnung nach Anspruch 2 oder 3, dadurch gekennzeichnet, dass zwischen dem Ausgang des A/D-Wandlers (2) und dem Abtaster (6) ein digitales Filter (5) vorgesehen ist, das als Hochpass wirkt und die Mittellage des Burst-Signals ermittelt.

5. Anordnung nach einem der Ansprüche 2 bis 4, dadurch gekennzeichnet, dass das PLL-Filter (8) als Proportional-Integral-Filter ausgeführt ist.

6. Anordnung nach einem der Ansprüche 2 bis 5, dadurch gekennzeichnet, dass das PLL-Filter (8) entsprechend der Filterfunktion

$$H(z) = a + \frac{z'^{-1}}{1 - z'^{-1}}$$

ausgeführt ist, mit z′ = e$^{j/f}$z, f$_Z$ = Zeilenfrequenz und a = konstanter Faktor zwischen 10 und 100, vorteilhaft als Zweierpotenz.

7. Anordnung nach einem der Ansprüche 2 bis 6, dadurch gekennzeichnet, dass der Phasendetektor den Mittelwert ($\Phi_d$) über die Abtastwerte des Burst-Signals für jede n-te Zeile gemäss

$$\Phi_d = \sum_J (+B_{0+j} - B_{1+j} - B_{2+j} + B_{3+j})$$

und für jede (n-1)-te Zeile gemäss

$$\sum_J (-B_{0+j} - B_{1+j} + B_{2+j} + B_{3+j}),$$

mit j = 0, 4, 8, ......, bildend ausgeführt ist.

8. Anordnung nach einem der Ansprüche 1 bis 7, dadurch gekennzeichnet, dass zwischen Abtaster (6) und Phasenvergleichsschaltung (7) ein Subtrahierer (23, Fig. 7) geschaltet ist, der einen Farbkorrekturwert (25) von den Abtastwerten des Burst-Signals subtrahiert.

9. Anordnung zur Durchführung des Verfahrens nach Anspruch 1 zur phasenstarren Synchronisierung des Systemtaktes einer Einrichtung zur digitalen Verarbeitung eines einen Pilotton (P) enthaltenden Stereosignals (St) auf den Pilotton (P), gekennzeichnet durch einen A/D-Wandler (2), der das Stereosignal (St) durch Abtastung mit der n-fachen, insbesondere 8-fachen, Frequenz des Pilottons (P) digitalisiert, eine Phasenvergleichsschaltung (7), der über einen vom Ausgang des A/D-Wandlers (2) über ein digitales, für die Frequenz des Pilottons (P) als Bandpass wirkendes Filter (31) beaufschlagten Abtaster (6) jeder m-te Abtastwert des Pilottons (P) zugeführt wird und die durch Gewichtung die Phasenabweichung zwischen dem digitalisierten Pilotton (P) und dem Systemtakt ($\Phi_0$) ermittelt, ein PLL-Filter (8), dem die Phasenabweichung zuführbar ist und ein von den digitalen Signalen des PLL-Filters (8) steuerbaren Oszillator (9), aus dessen Ausgangssignal der Systemtakt ($\Phi_0$) ableitbar ist.

## Claims

1. A method of digitally regulating the phase of the system clock signal ($\Phi_{10}$) of a digital signal processing system which processes an analogue signal (FBAS) containing a reference signal (13), where a fixed phase relationship exists between the digitalised reference signal and the system clock signal ($\Phi_{10}$) characterised in that the reference signal (B) is digitalised by sampling the analogue reference signal, that the sample values of the digitalised reference signal are weighted in order to obtain a digital phase comparison value ($\Phi_d$) and that the phase comparison value ($\Phi_d$) is fed via a digital PLL-filter (8) to a digitally controllable oscillator (9) from whose output signal the phase-regulated system clock signal ($\Phi_{10}$) is derived.

2. An arrangement for executing the method claimed in claim 1, characterised in that an A/D-converter (2) is provided which digitalises the analogue signal (FBAS) which contains a reference signal, by sampling with a clock signal derived from the system clock signal ($\Phi_{10}$), that a phase comparator circuit (7) is provided which is supplied with every n-th sample value of the reference signal via a sampler (6), connected to the output of the A/D-converter (2), during the active time of the reference signal, and which, by weighting, determines the phase deviation ($\Phi_d$) between digitalised reference signal and system clock signal, that a PLL-filter (8) is provided which can be supplied with the phase deviation ($\Phi_d$) and that an oscillator (9) is provided which can be controlled by the digital output signals of the PLL-filter (8) and from whose output signal the system clock signal ($\Phi_{10}$) can be derived.

3. An arrangement as claimed in claim 2 for synchronising the system clock signal of a digital colour decoder to the burst signal contained in the FBAS-signal of a colour television receiver, characterised in that an A/D-converter (2) is provided which digitalises the FBAS-signal (FBAS) by sampling with the n-fold, in particular 4-fold, colour carrier frequency (system clock signal), that a phase comparator circuit (7) is provided which is supplied with every n-th sample value of the burst signal (8) during the burst time via a sampler (6) which is connected to the output of the A/D-converter (2), and which, by weighting, determines the phase deviation ($\Phi_d$) between the digitalised burst signal and the system clock signal ($\Phi_{10}$), that a PLL-filter (8) is provided which can be supplied with the phase deviation ($\Phi_d$) and that an oscillator (9) is provided which can be controlled by the digital output signals of the PLL-filter (8) and from whose output signal the system clock signal ($\Phi_{10}$) can be derived.

4. An arrangement as claimed in claim 2 or 3, characterised in that between the output of the A/D-converter (2) and the sampler (6) a digital filter (5) is arranged which acts as a high-pass filter and which determines the mean position of the burst signal.

5. An arrangement as claimed in one of the claims 2 to 4, characterised in that the PLL-filter (8) is designed as a proportional-integral filter.

6. An arrangement as claimed in one of the claims 2 to 5, characterised in that the PLL-filter (8) is designed in accordance with the filter function

$$H(z) = a + \frac{z'^{-1}}{1 - z'^{-1}}$$

where z′ = e$^{j/f}$z, f$_Z$ = line frequency and a = a constant factor between 10 and 100, advantageously as a power of two.

7. An arrangement as claimed in one of the claims 2 to 6, characterised in that the phase detector is designed to form the mean value ($\Phi_d$) via the sample values of the burst signal for every n-th line in accordance with

$$0_d = {}_j(+B_{0+j} - B_{1+j} - B_{2+j} + B_{3+j})$$

and for every (n-1)-th line in accordance with

$$j(-B_{0+j} - B_{1+j} + B_{2+j} + \dot{B}_{3+j}),$$

where j = 0, 4, 8, ...

8. An arrangement as claimed in one of the claims 1 to 7, characterised in that between the sampler (6) and the phase comparator circuit (7) a subtractor (23, Fig. 7) is connected which substracts a colour correction value (25) from the sample values of the burst signal.

9. An arrangement for executing the method claimed in claim 1 for the phase-locked synchronisation of the system clock signal of a device for the digital processing of a stereo-signal (St), containing a pilot tone (P), to the pilot tone (P), characterised by an A/D-converter (2) which digitalises the stereo-signal (St) by sampling with the n-fold, in particular 8-fold frequency of the pilot tone (P), by a phase comparator circuit (7) which is supplied with every m-th sample value of the pilot tone (P) via a sampler (6) which is connected to the output of the A/D-converter (2) via a digital filter (31) which serves as band-pass filter for the frequency of the pilot tone (P), and which, by weighting, determines the phase deviation between the digitalised pilot tone (P) and the system clock signal ($\Phi_0$), by a PLL-filter (8) which can be supplied with the phase deviation and by an oscillator (9) which can be controlled by the digital signals of the PLL-filter (8) and from whose output signal the system clock signal ($\Phi_0$) can be derived.

## Revendications

1. Procédé de réglage numérique de la phase du signal d'horloge ($\Phi_{10}$) d'un système numérique de traitement de signaux, qui traite un signal analogique (FBAS) contenant un signal de référence (13) et dans lequel il existe une relation de phase fixe entre le signal de référence numérisé et le signal d'horloge ($\Phi_{10}$) du système, caractérisé par le fait que le signal de référence (B) est numérisé par échantillonnage du signal de référence analogique, que les valeurs d'échantillonnage du signal de référence numérisé sont pondérées en vue de l'obtention d'une grandeur numérique comparative de phase ($\Phi_d$), et que la grandeur comparative de phase ($\Phi_d$) est envoyée par l'intermédiaire d'un filtre PLL numérique (8) à un oscillateur (9) pouvant être commandé numériquement et à partir du signal de sortie duquel est dérivé le signal d'horloge ($\Phi_{10}$) du système, dont la phase est réglée.

2. Dispositif pour la mise en œuvre du procédé suivant la revendication 1, caractérisé par le fait qu'il est prévu un convertisseur analogique/numérique (2), qui numérise le signal analogique (FBAS), contenant un signal de référence, par échantillonnage avec un signal d'horloge dérivé du signal d'horloge ($\Phi_{10}$) du système, qu'il est prévu un circuit comparateur de phase (7), auquel chaque n-ème valeur d'échantillonnage du signal de référence est envoyée pendant la durée d'activité du signal de référence, par l'intermédiaire d'un dispositif d'échantillonnage (6) chargé par le signal de sortie du convertisseur analogique/ numérique (2) et qui détermine, par pondération, le déphasage ($\Phi_d$) entre le signal de référence numérisé et le signal d'horloge du système, qu'il est prévu un filtre PLL (8), auquel le déphasage ($\Phi_d$) peut être envoyé, et qu'il est prévu un oscillateur (9), qui peut être commandé par les signaux de sortie numérique du filtre PLL (8) et à partir du signal de sortie duquel le signal d'horloge ($\Phi_{10}$) du système peut être dérivé.

3. Dispositif suivant la revendication 2, utilisé pour la synchronisation du signal d'horloge du système d'un décodeur numérique de couleurs pour le signal de salve de référence contenu dans le signal (FBAS) d'un récepteur de télévision en couleurs, caractérisé par le fait qu'il est prévu un convertisseur analogique/numérique (2), qui numérise le signal FBAS (FBAS) par échantillonnage avec une fréquence égale à n fois et notamment 4 fois la fréquence de la porteuse couleurs (signal d'horloge du système), qu'il est prévu un circuit comparateur de phase (7) auquel la n-ème valeur d'échantillonnage du signal de salve de référence (8) est envoyée pendant la durée de la salve de référence par l'intermédiaire d'un dispositif d'échantillonnage (6) chargé par le signal de sortie du convertisseur analogique/numérique (2) et qui détermine, par pondération, le déphasage ($\Phi_d$) entre le signal de salve de référence numérisé et le signal d'horloge ($\Phi'_{10}$) du système, qu'il est prévu un filtre PLL (8), auquel le déphasage ($\Phi_d$) peut être envoyé, et qu'il est prévu un oscillateur (9), qui peut être commandé par les signaux de sortie numériques du filtre PLL (8) et à partir du signal de sortie duquel le signal d'horloge ($\Phi_{10}$) du système peut être dérivé.

4. Dispositif suivant la revendication 2 ou 3, caractérisé par le fait qu'il est prévu, entre la sortie du convertisseur analogique/numérique (2) et le dispositif d'échantillonnage (6), un filtre numérique (5) qui agit en tant que filtre passe-haut et détermine la position moyenne du signal de salve de référence.

5. Dispositif suivant l'une des revendications 2 à 4, caractérisé par le fait que le filtre PLL (8) est réalisé sous la forme d'un filtre à action proportionnelle et intégrale.

6. Dispositif suivant l'une des revendications 2 à 5, caractérisé par le fait que le filtre PLL est réalisé conformément à la fonction de filtre

$$H(z) = a + \frac{z'^{-1}}{1 - z'^{-1}}$$

avec $z' = e^{j/f}z$, $f_z$ étant la fréquence de lignes et a un facteur constant compris entre 10 et 100, et égal avantageusement à une puissance de deux.

7. Dispositif suivant l'une des revendications 2 à 6, caractérisé par le fait que le détecteur de phase est agencé de manière à former la valeur moyenne ($\Phi_d$) sur les valeurs d'échantillonnage du signal de salve de référence pour chaque n-ème ligne conformément à

$$\Phi_d = \sum_j (+B_{0+j} - B_{1+j} - B_{2+j} + B_{3+j})$$

et pour chaque (n-1)-ème ligne, conformément à

$$\sum_{j} (-B_{0+j} - B_{1+j} + B_{2+j} + B_{3+j}),$$

avec j = 0, 4, 8, ....

8. Dispositif suivant l'une des revendications 1 à 7, caractérisé par le fait qu'entre le dispositif d'échantillonnage (6) et le circuit comparateur de phase (7) se trouve branché un soustracteur (27, figure 7), qui soustrait une valeur de correction de couleur (25) des valeurs d'échantillonnage du signal de salve de référence.

9. Dispositif pour la mise en œuvre du procédé suivant la revendication 1, pour réaliser la synchronisation, à phase bloquée, du signal d'horloge du système d'un dispositif de traitement numérique d'un signal stéréophonique (St), contenant une tonalité pilote (P), sur la tonalité pilote (P), caractérisé par un convertisseur analogique/ numérique (2), qui numérise le signal stéréophonie (St) par échantillonnage avec une fréquence égale à n fois, notamment 8 fois la fréquence de la tonalité pilote (P), un circuit comparateur de phase (7), auquel chaque m-ème valeur d'échantillonnage de la tonalité pilote (P) est envoyée par l'intermédiaire d'une sortie du convertisseur analogique/numérique (2) et d'un filtre numérique (31) agissant en tant que filtre passe-bande pour la fréquence de la tonalité pilote (P), et qui détermine, par pondération, le déphasage entre la tonalité pilote numérisée (P) et le signal d'horloge ($\Phi_0$) du système, un filtre PLL (8), auquel le déphasage peut être envoyé, et un oscillateur (9), qui peut être commandé par les signaux numériques du filtre PLL (8) et à partir du signal de sortie duquel le signal d'horloge ($\Phi_0$) du système peut être dérivé.

FIG 1

FIG 2

FIG 3

FIG 4

# FIG 5

# FIG 6

FIG 7

FBAS

FIG 8

Amplitude

$F_u$

t

17

# FIG 9

# FIG 10